# EUROPÄISCHE PATENTSCHRIFT

(11) **EP 4 455 099 B1**
(45) Veröffentlichungstag und Bekanntmachung des Hinweises auf die Patenterteilung: **18.06.2025**
(21) Anmeldenummer: 24170960.9
(22) Anmeldetag: 18.04.2024
(51) Int. Cl.: C02F 11/18, C02F 1/52, C02F 1/66, C02F 101/10

(54) **PHOSPHORRÜCKGEWINNUNG AUS EINEM KLÄRSCHLAMM**
PHOSPHORUS RECOVERY FROM SEWAGE SLUDGE
RÉCUPÉRATION DE PHOSPHORE À PARTIR DE BOUES D'ÉPURATION

(30) Priorität: 28.04.2023 DE 102023111029
(43) Veröffentlichungstag der Anmeldung: 30.10.2024
(73) Patentinhaber: Technische Universität Clausthal, 38678 Clausthal-Zellerfeld (DE)
(72) Erfinder: Sievers, Michael, 38678 Clausthal-Zellerfeld (DE); Schumann, Rene, 31195 Lamspringe (DE)
(74) Vertreter: REHBERG HÜPPE + PARTNER

(56) Entgegenhaltungen:
- EP-A1- 3 984 966
- DE-A1- 102011 112 780

## Beschreibung

### TECHNISCHES GEBIET DER ERFINDUNG

Die Erfindung betrifft ein Verfahren zur Phosphorrückgewinnung aus einem Klärschlamm. Genauer betrifft die Erfindung ein Verfahren mit den Merkmalen des Oberbegriffs des unabhängigen Patentanspruchs 1.

Um sicherzustellen, dass durch die Produkte einer Kläranlage kein ungewollter Eintrag von Phosphor und insbesondere von Phosphat in Böden und Gewässer erfolgt, ist der in der Trockensubstanz von Klärschlamm enthaltene Phosphor zurückzugewinnen. In Deutschland wird ab 2029 eine Fassung der Klärschlammverordnung in Kraft treten, nach der es verpflichtend ist, den Phosphorgehalt in der Trockensubstanz von Klärschlamm auf nicht mehr als 20 g Phosphor je Kilogramm Trockensubstanz (20 gP/kgTR) zu reduzieren. Typische Klärschlämme weisen Phosphorgehalte zwischen 25 gP/kgTR und 40 gP/kgTR auf. Dabei bezieht sich diese Angabe auf einen Überschlussschlamm, also einen Belebschlamm, der aus einer Belebungsanlage abgezogen wird, in der ein in einer Kläranlage anfallender Primärschlamm einer ersten Schlammbehandlung unterzogen wird.

### STAND DER TECHNIK

Aus dem Schlussbericht "Entwicklung eines Verfahrens zur Phosphat-Rückgewinnung aus ausgefaultem Nassschlamm oder entwässertem Faulschlamm als gut pflanzenverfügbares Magnesium-Ammonium-Phosphat (MAP)" der iat-Ingenieurberatung GmbH, Stuttgart, der Universität Stuttgart, Institut für Siedlungswasserbau, Wassergüte- und Abfallwirtschaft und der Poll Umwelt- und Verfahrenstechnik GmbH, Selm, März 2005, siehe https://www.dbu.de/OPAC/ab/DBU-Abschlussbericht-AZ-21042pdf, ist es bekannt, Phosphor aus ausgefaultem Schlamm mit Hilfe folgender Schritte rückzugewinnen: Rücklösung des im Schlamm gebundenen Phosphors durch einen potentiell kombinierten Einsatz von Säuren, Laugen, Hitze und Druck, Abtrennung der phosphorreichen flüssigen Phase von der zurückbleibenden festen Phase und Phosphorrückgewinnung aus der flüssigen Phase mittels Fällung und Abtrennung des Phosphorprodukts. Bei dem für die Phosphorrücklösung notwendigen niedrigen oder hohen pH-Werten kommt es neben der Rücklösung von Phosphor auch zur Rücklösung insbesondere von Al-, Fe-, Ca- und anderer Schwermetallionen, die zusammen als Störionen bezeichnet werden. Um eine Fällung der Störionen bei einer Neutralisation zur Auslösung der MAP-Fällung des rückgelösten Phosphors zu verhindern, werden die Störionen zuvor mit Hilfe von Komplexbildnern in Komplexen gebunden. Unter anderen wird triNatriumcitrat, das Natriumsalz der Zitronensäure, als Komplexbilder eingesetzt. Zur Reduzierung des Gesamtaufwands des Verfahrens wird vorgeschlagen, die Rücklösung des Phosphats direkt mit Zitronensäure durchzuführen oder zumindest einen Teil der dafür erforderlichen Schwefelsäure durch Zitronensäure zu ersetzen, so dass sich das zur Komplexierung vorteilhafte Natriumcitrat bei der Neutralisation bildet und nicht zugesetzt werden muss.

Bei dem so genannten Stuttgarter Verfahren, siehe www.deutsche-phosphor-plattform.de, Verfahren zur Phosphor-Rückgewinnung - auf der Kläranlage, Stuttgarter Verfahren +, Kennblatt Stand Mai 2018, wird eine Phosphor-Rückgewinnung mit saurem Leaching aus Faulschlamm in folgenden Schritten durchgeführt: Zunächst erfolgt eine saure Hydrolyse von Faulschlamm mit Schwefelsäure bei einem pH-Wert von 3 bis 4. Mit einer Kammerfilterpresse wird dann ein saures Filtrat gewonnen. Zur anschließenden Komplexbildung von Metallen und Schwermetallen (Fe, Al, Ca, Mg) wird Zitronensäure im Verhältnis 1:1 zu dosiert. Durch Ultrafiltration wird ein saures Permeat gewonnen. Dann erfolgt eine Zudosierung von Magnesium (MgO) zu Phosphat im Verhältnis von 1,5:1. Die anschließende Struvit-Fällung wird mit einer Zudosierung von Natronlauge (NaOH) bis auf einen pH-Wert von 8 ausgelöst. Das Struvit-Rezyklat kann nun mit Hilfe eine Kammerfilterpresse abgetrennt werden.

Aus X. Ren et al.: "Citric Acid and ethylene diamine tetra-acetic acid as effective washing agents to treat sewage sludge for agricultural reuse", Waste Management 46 (2015) 440-448, ist es bekannt, Klärschlamm mit Zitronensäure zu behandeln, um Schwermetalle durch Komplexbildung zu entfernen. Nach Behandlung mit Zitronensäue waren die Gesamtstickstoff- und Gesamtphosphorkonzentrationen in dem Schlamm reduziert, während der Gehalt an verfügbarem Stickstoff und Olsen-Phosphor erhöht war. Als optimale Zitronensäurekonzentration zur Klärschlammbehandlung werden 0,60 mol/l angegeben.

Aus J. Prasityousil et al.: "Phosphorus Recovery from municipal wastewater sludge by adding phosphatase and citric acid as catalyst" Hokkaido University Collection of Scholarly and Academic Papers: HUSCAP, see http://hdl.handle.net/2115/7702, ist es bekannt, zur Rückgewinnung von Phosphor aus städtischem Klärschlamm das Enzym Phosphatase und Zitronensäure als Katalysator zu verwenden. Dabei wurde festgestellt, dass es bei Fe-belastetem Schlamm möglich ist, saure Phosphatase als Enzym und Zitronensäure zusammen zu verwenden, um PO4⁻³-Phosphor in löslicher Form freizusetzen, weil sich die optimalen pH-Werte für die Enzymaktivität bei pH 4,3 und die Aktivität von Zitronensäure bei pH 4,95 ähnlich sind.

Aus M. Sievers und R. Schuhmann: "Klima- und ressourcenschonende Phosphorrückgewinnung" Wasserwirtschaft Wassertechnik - Praxismagazin für Trink- und Abwassermanagement, Oktober 2022, https://www.umweltwirtschaft.com/epaper/umw/281/epaper/8561/14/index.html ist eine Phosphatrückgewinnung aus Überschussschlamm einer Kläranlage bekannt. Durch eine thermische Schlammhydrolyse werden bis zu 80 % des im Schlamm enthaltenen Phosphors in das Schlammwasser rückgelöst. Dabei soll auch für Kläranlagen mit anteiliger chemischer P-Elimination durch den Einsatz von geringen Mengen an Zitronensäure in der Hydrolyse hohe Rücklösungen erreicht werden. Die rückgelösten Phosphate werden anschließend nahezu vollständig aus dem Schlammwasser gefällt. Durch die Zugabe von Natronlauge wird der pH-Wert im Schlammwasser leicht angehoben. In Kombination mit der Zugabe von Magnesiumchlorid bildet sich Magnesium-Ammonium-Phosphat (MAP), dass ohne großen Aufwand aus dem Schlammwasser zurückgewonnen werden kann. In Folge der milden Phosphatrücklösung und der Fällung aus nahezu feststofffreien Schlammwasser wird ein Phosphorrezyklat erzeugt, dass nur geringe organische Verunreinigungen und keine nachweisbare Schwermetallbelastung aufweisen soll.

Aus der DE 10 2019 112 513 A1 ist ein Verfahren zur Behandlung von phosphorhaltigem Klärschlamm bekannt. Zu dem phosphorhaltigem Klärschlamm wird ein Komplexiermittel zur Komplexbildung von Metallionen und der Freisetzung von ortho-Phosphaten zugeführt. Eine phosphorhaltige Flüssigphase aus dem mit Komplexiermittel versetzen phosphorhaltigen Klärschlamm wird abgetrennt. Aus der phosphorhaltigen Flüssigphase wird ein Phosphoranteil abgetrennt. Das dabei verbleibende Prozesswasser, welches das Komplexiermittel enthält und um den abgetrennten Phosphoranteil vermindert ist, wird einer anaeroben Behandlungsstufe des Klärschlamms zugeführt. Das Abtrennen des Phosphoranteils aus der phosphorhaltigen Flüssigphase erfolgt durch MAP-Fällung oder durch Zugabe von Ca-Phosphat.

Aus der EP 3 984 966 A1 ist ein Verfahren zum Behandeln von phosphor-/phosphathaltigem Rohschlamm bekannt, das die Merkmale des Oberbegriffs des unabhängigen Patentanspruchs 1 aufweist. Der phosphor-/phosphathaltiger Rohschlamm wird unter Abtrennung eines ersten flüssigen Anteils eingedickt. Der eingedickte Rohschlamm wird desintegriert. Der desintegrierte Rohschlamm wird durch Zuführen einer Flüssigkeit verdünnt. Der verdünnte desintegrierte Rohschlamm wird zur Gewinnung eines eingedickten desintegrierten Rohschlamms unter Abtrennen eines zweiten flüssigen Anteils eingedickt. Phosphor/Phosphat wird aus dem zweiten flüssigen Anteil abgetrennt. Unter einem Rohschlamm wird dabei unter anderem Überschussschlamm verstanden. Das Desintegrieren erfolgt beispielsweise mittels thermischer und/oder thermo-chemischer Hydrolyse. Es wird als vorteilhaft angesehen, wenn der verdünnte desintegrierte Rohschlamm einen pH-Wert von kleiner 8 aufweist, insbesondere einen pH-Wert kleiner oder gleich 7, bevorzugt einen pH-Wert von 4 bis 6. Bei den thermischen und/oder thermo-chemischen Desintegrationsverfahren findet ohne zusätzliche Säurezugabe eine pH-Wert-Absenkung um 0,5 bis 1,0 statt. Eine pH-Wert-Absenkung des verdünnten desintegrierten Rohschlamms und/oder des eingedickten Rohschlamms und/oder des eingedickten desintegrierten Rohschlamms kann mittels anorganischer Säuren, beispielsweise Salzsäure, Salpetersäure oder Schwefelsäure, und/oder organischer Säuren, beispielsweise Essigsäure oder Zitronensäure, erfolgen. Eine pH-Wert-Absenkung der vorgenannten Klärschlämme kann aber auch alleine oder zusätzlich durch die einsetzende pH-Wert-Absenkung bei der thermischen oder thermo-chemischen Hydrolyse erfolgen. Das Abtrennen von Phosphor/Phosphat aus dem zweiten flüssigen Anteil erfolgt mittels MAP-Fällung.

Aus der DE 10 2011 112 780 A1 ist ein Verfahren zur Behandlung von Klärschlamm mit den Behandlungsschritten der Hydrolyse des Klärschlamms und der Faulung des der Hydrolyse unterzogenen hydrolisierten Klärschlamms zur anaeroben Behandlung des Klärschlamms bekannt. Eine Abtrennung von Phosphat erfolgt nach dem Behandlungsschritt der Hydrolyse und vor dem Behandlungsschritt der Faulung des hydrolysierten Klärschlamms.

### AUFGABE DER ERFINDUNG

Der Erfindung liegt die Aufgabe zugrunde, ein Verfahren mit den Merkmalen des Oberbegriffs des unabhängigen Patentanspruchs 1 aufzuzeigen, bei dem durch die Prozessführung dafür Sorge getragen wird, dass die MAP-Fällung zur Rückgewinnung des Phosphors besonders wirtschaftlich durchgeführt werden kann.

### LÖSUNG

Die Aufgabe der Erfindung wird durch ein Verfahren mit den Merkmalen des unabhängigen Patentanspruchs 1 gelöst. Die abhängigen Patentansprüche betreffen bevorzugte Ausführungsformen des erfindungsgemäßen Verfahrens.

### BESCHREIBUNG DER ERFINDUNG

Bei dem erfindungsgemäßen Verfahren zur Phosphorrückgewinnung aus einem Klärschlamm wird der Klärschlamm einer thermisch-biologischen Hydrolyse unterworfen, um aus seiner Trockensubstanz Phosphor als Phosphat zu lösen. Die thermische Hydrolyse wird für einen ersten Zeitraum bei einem ersten pH-Wert durchgeführt. Der erste Zeitraum wird beendet, indem Zitronensäure zugesetzt wird, so dass der erste pH-Wert um mindestens 0,5 auf einen zweiten pH-Wert abgesenkt wird. Bei dem zweiten pH-Wert wird die thermische Hydrolyse für einen zweiten Zeitraum fortgesetzt, der mindestens 0,5 Stunden beträgt, aber kürzer ist als der erste Zeitraum. Von einem durch die Hydrolyse erhaltenen Hydrolysat wird ein Schlammwasser abgetrennt. Das gelöste Phosphat wird in einer MAP-Fällung durch Anheben des pH-Werts und Zugabe eines Magnesiumionendonators als Magnesium-Ammonium-Phosphat aus dem Schlammwasser gefällt.

Die thermisch-biologische Hydrolyse wird durch Zuführung von Wärme gestartet, um den Klärschlamm auf eine Temperatur zwischen 45°C und 70°C zu bringen, wobei eine Temperatur zwischen 50°C und 60°C bevorzugt ist. Bei zu tiefen Temperaturen laufen biologische Prozesse sehr langsam ab. Bei zu hohen Temperaturen treten unerwünschte Denaturierungen biologischer Substanzen auf. Die gewünschte Temperatur der thermisch-biologischen Hydrolyse kann zum Teil auch durch im Rahmen der Hydrolyse ablaufende exotherme Reaktionen bereitgestellt werden.

Je nach Zusammensetzung des Klärschlamms bildet sich in dem ersten Zeitraum vor der Zugabe der Zitronensäure der erste pH-Wert irgendwo um 7 aus, wobei ein pH-Wert zwischen 6,0 und 8,0 bevorzugt ist und gegebenenfalls durch Zugabe von Säure oder Lauge eingestellt werden kann. Bei einer thermisch-biologischen Hydrolyse bei einem pH-Wert von größer oder gleich 6,0 wird aus der Trockensubstanz des Klärschlamms nicht nur Phosphor als Phosphat, sondern auch Stickstoff als Ammonium gelöst. Dieses Ammonium wird für die MAP-Fällung genutzt.

Die thermisch-biologische Hydrolyse während des Zeitraums löst biologisch in der Trockensubstanz gebundenen Phosphor. Chemisch in der Trockensubstanz gebundener Phosphor wird in dem ersten Zeitraum der thermisch-biologischen Hydrolyse jedoch nicht effektiv gelöst. Die Zugabe der Zitronensäure, die mit der Absenkung des pH-Werts von dem ersten pH-Wert um mindestens 0,5 auf den zweiten pH-Wert verbunden ist, hat jedoch die Lösung auch von chemisch gebundenem Phosphor aus der Trockensubstanz zur Folge. So ist es selbst beim Vorliegen größerer Mengen an chemisch gebundenem Phosphor in der Trockensubstanz möglich, eine vorgegebene Obergrenze für den Phosphorgehalt in der Trockensubstanz von beispielsweise 20 gP/kgTR einzuhalten.

Die Zitronensäure hat ihre größte katalytische Wirkung für das Lösen von chemisch gebundenem Phosphor aus der Trockensubstanz bei einem pH-Wert um 5. Bei diesem pH-Wert um 5 erfolgt jedoch keine Lösung von Stickstoff in Form von Ammonium aus der Trockensubstanz. Es wäre also nicht zielführend, die Zitronensäure bereits zu Beginn der thermisch-biologischen Hydrolyse zuzusetzen. Ganz im Gegenteil erweist es sich als wichtig, die Zitronensäure erst relativ spät und nur noch für einen vergleichsweise kurzen zweiten Zeitraum der Hydrolyse zuzusetzen, der aber noch ausreichend lang ist, um einen ausreichend großen Anteil des chemische gebundenen Phosphors aus der Trockensubstanz zu lösen. Vorzugsweise beträgt der zweite Zeitraum 0,75 bis vier Stunden. Praktisch erweisen sich etwa ein bis zwei Stunden als günstig. Über einen solchen begrenzten zweiten Zeitraum tritt auch keine signifikante Reduktion des zuvor während des ersten Zeitraums gelösten Ammoniums auf.

Die Zitronensäure fördert die Lösung des chemisch gebundenen Phosphors aus der Trockensubstanz durch Komplexbildung mit Metall- und Schwermetallionen, die sonst den Phosphor in Form schwerlöslicher Phosphatsalze in der Trockensubstanz halten. Insoweit wird die Komplexbildung der Zitronensäure mit den Metallionen und Schwermetallionen zu einem anderen Zweck eingesetzt, als wenn die Zitronensäure- wie aus dem Stand der Technik bekannt, erst später zu dem abgetrennten Schlammwasser zugesetzt wird, um daraus Schwermetalle durch Komplexbildung zu entfernen. Umgekehrt sind auch bei dem erfindungsgemäßen Verfahren die mit der Zitronensäure komplexierten Metallionen und Schwermetallionen nicht mehr in dem abgetrennten Schlammwasser und damit auch nicht in dem Produkt der MAP-Fällung enthalten.

Insgesamt führt das erfindungsgemäße Verfahren mit einem sehr moderaten Einsatz von Chemikalien und Prozesstechnologie zu der gewünschten Reduktion des Phosphorgehalts der Trockensubstanz des Querschlamms und einem hochwertigen Produkt der MAP-Fällung. Damit sind beste Vorrausetzung für eine hohe Wirtschaftlichkeit des erfindungsgemäßen Verfahrens gegeben.

Der Trockensubstanzgehalt des Klärschlamms, aus dem die erfindungsgemäße Phosphor-rückgewinnung erfolgt, liegt typischerweise zwischen 30 g/l und 60 g/l. Vorzugsweise liegt der Trockensubstanzgehalt zwischen 40 g/l und 50 g/l.

In dem ersten Zeitraum kann die Hydrolyse ohne jegliche Zugabe von Zitronensäure zu dem Klärschlamm erfolgen. Vorzugsweise erfolgt sie in Abwesenheit von Zitronensäure. Grundsätzlich kann aber auch schon in dem ersten Zeitraum der Hydrolyse des erfindungsgemäßen Verfahrens Zitronensäure vorhanden sein, solange der pH-Wert dadurch nicht unter 6,0 abgesenkt wird, um die Lösung von Stickstoff als Ammonium aus der Trockensubstanz nicht zu behindern. Bei einem pH-Wert von größer oder gleich 6,0 ist die Zitronensäure jedoch auch bei der Lösung von Phosphor aus der Trockensubstanz als Phosphat nicht effektiv wirksam.

Vorzugsweise wird der erste Zeitraum der thermisch-biologischen Hydrolyse dann beendet, wenn die Freisetzung von Stickstoff aus der Trockensubstanz des Klärschlamms als Ammonium im Wesentlichen abgeschlossen ist, so dass die Zugabe der Zitronensäure die Gesamtfreisetzung von Ammonium nicht beeinträchtigt. Konkret kann der erste Zeitraum dann beendet werden, wenn die Freisetzung von Stickstoff aus Trockensubstanz des Klärschlamms als Ammonium auf unter 50 %, vorzugsweise auf unter 25 % ihres bisherigen Mittelwertes während des ersten Zeitraums der Hydrolyse abgefallen ist. Je nach dem zeitlichen Verlauf der Freisetzung kann auch noch länger gewartet werden, beispielsweise bis die Freisetzung des Stickstoffs aus der Trockensubstanz des Klärschlamms als Ammonium auf unter 10 % ihres bisherigen Mittelwerts abgefallen ist.

In der Praxis erweist sich eine Gesamtdauer der thermisch-biologischen Hydrolyse im Bereich von ein bis zwei Tagen als sinnvoll. Konkret kann der erste Zeitraum 20 Stunden bis 48 Stunden betragen und der zweite Zeitraum kann, wie bereits ausgeführt wurde, zwischen 0,75 Stunden und 4 Stunden betragen. Das Verhältnis des ersten Zeitraums zu dem zweiten Zeitraum liegt also typischerweise bei mindestens 5:1 und damit deutlich über dem absoluten Mindestwert von 2:1.

Um den Phosphorgehalt der Trocknungssubstanz eines Klärschlamms unter 20 gP/kgTR zu reduzieren, kann dann, wenn der Phosphorgehalt am Ende des ersten Zeitraums (20 + z) gP/kgTR beträgt, mindestens (z x 6) Gramm Zitronensäure je Kilogramm Trockensubstanz zugegeben werden, um den ersten Zeitraum zu beenden. Die sich dadurch praktisch ergebenden Mengen an Zitronensäure liegen in einem typischen Bereich von 20 g bis 100 g je ein Kilogramm Trockensubstanz des Klärschlamms. Damit kann der Phosphorgehalt um etwa 3 bis 17 g Phosphor je ein Kilogramm Trockensubstanz reduziert werden.

Beim Abtrennen des Schlammwassers vor der MAP-Fällung wird vorzugsweise ein Trockensubstanzgehalt des entwässerten Hydrolysats von mindestens 150 g/l und vorzugsweise von mindestens 200 g/l eingestellt. Je höher der Trockensubstanzgehalt des entwässerten Hydrolysats ist, desto mehr des gelösten Phosphats wird mit dem Schlammwasser von dem entwässerten Hydrolysat entfernt.

Das entwässerte Hydrolysat kann mit einem Rückstand der MAP-Fällung verdünnt und anschließend einer anaeroben Schlammbehandlung, das heißt einer Faulung, unterworfen werden. Bei dem erfindungsgemäßen Verfahren wird jedoch dem Klärschlamm und dem Schlammwasser vor der MAP-Fällung regelmäßig kein Produkt einer solchen anaeroben Schlammbehandlung des entwässerten Hydrolysats zugeführt, um durch eine solche Produktrückführung den Volumenstrom nicht zu vergrößern, weil dies den Aufwand bei der Prozesstechnologie erhöhen würde. Vielfach kann auch darauf verzichtet werden, dem Klärschlamm oder dem Schlammwasser Ammonium für die MAP-Fällung zuzusetzen. Vielmehr reicht das aus der Trockensubstanz des Klärschlamms freigesetzte Ammonium bei adäquater Prozessführung in aller Regel aus.

In der MAP-Fällung kann der pH-Wert konkret auf zwischen 9,0 und 9,5 angehoben werden. Dies kann mit Hilfe von Natronlauge geschehen. Weiterhin kann dem Schlammwasser in der MAP-Fällung Magnesiumchlorid als Magnesiumionendonator zugesetzt werden. Dieses Magnesiumchlorid und auch jeder andere Magnesiumionendonator stammt vorzugsweise aus einer Weiterverarbeitung des in der MÄP-Fällung ausgefällten Magnesium-Ammonium-Phosphats.

Der Klärschlamm, aus dem mit dem erfindungsgemäßen Verfahren Phosphor zurückgewonnen wird, ist insbesondere ein Überschlussschlamm, also ein aus einer Belebungsanlage abgezogener, das heißt aerob vorbehandelter Schlamm. Grundsätzlich kann es sich aber auch um einen Faulschlamm, dass heißt einen anaerob vorbehandelten Schlamm handeln.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Magnesiumionendonator die Rede ist, ist dies so zu verstehen, dass genau ein Magnesiumionendonator, zwei Magnesiumionendonatoren oder mehr Magnesiumionendonatoren eingesetzt werden. Die in den Patentansprüchen angeführten Merkmale können durch weitere Merkmale ergänzt werden oder die einzigen Merkmale sein, die das Verfahren des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: ist ein Schema des erfindungsgemäßen Verfahrens.
- **Fig. 2**: zeigt die Erhöhung der Phosphatkonzentration im Schlammwasser während einer thermisch-biologischen Hydrolyse des Verfahrens gemäß Fig. 1, abhängig vom Zeitpunkt einer Zugabe von Zitronensäure in der Hydrolyse.
- **Fig. 3**: ist eine Auftragung einer spezifischen Phosphatrücklösung, die durch eine Zugabe der Zitronensäure in unterschiedlichen spezifischen Dosierungen bezogen auf die Trockensubstanz in der Hydrolyse erreicht wird.
- **Fig. 4**: zeigt den zeitlichen Verlauf einer Ammoniumkonzentration in dem Schlammwasser während der Hydrolyse für die verschiedenen Zeitpunkte der Zugabe der Zitronensäure.
- **Fig. 5**: zeigt das Molverhältnis von Stickstoff zu Phosphor im Hydrolysat bei maximaler Phosphorrücklösung am Ende der Hydrolyse und verschiedenen Zeitpunkten der Zugabe der Zitronensäure; und
- **Fig. 6**: ist ein Funktionsdiagramm einer Anlage zur Durchführung des erfindungsgemäßen Verfahrens mit gegenüber Fig. 1 zusätzlichen Schritten.

### FIGURENBESCHREIBUNG

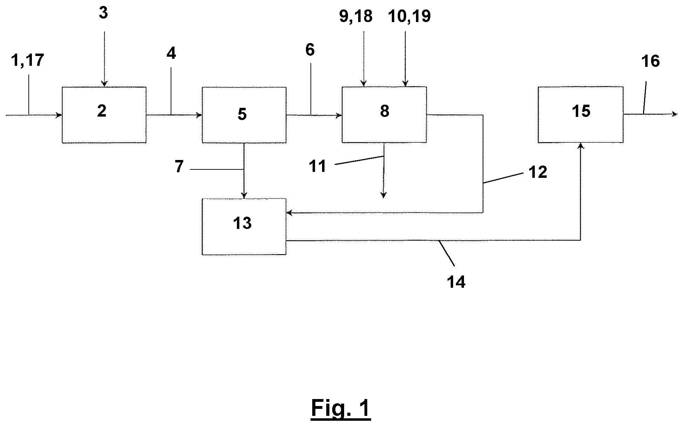

Die in der folgenden Erläuterung des Verfahrensschemas gemäß **Fig. 1** gemachten Zahlenangaben geben zwar bevorzugte Wertebereiche an, sind aber nicht dahingehend zu verstehen, dass das Verfahren nur innerhalb dieser Wertebereiche erfolgreich durchgeführt werden kann. Als Klärschlamm 1, aus dem mit dem erfindungsgemäßen Verfahren Phosphor zurückgewonnen werden soll, wird ein eingedickter Überschussschlamm mit einem Trockensubstanzgehalt im Bereich von 40 g/l bis 50 g/l einer thermisch-biologischen Hydrolyse 2 zugeführt. Die Hydrolyse 2 des eingedickten Überschussschlamms 17 erfolgt für 24 Stunden bis 48 Stunden bei 50°C bis 60°C. Während eines ersten Zeitraumes der Hydrolyse stellt sich ein erster pH-Wert von größer oder gleich 6,0 ein. Der genau pH-Wert ist von der Zusammensetzung des Klärschlamms 1 abhängig. Der erste Zeitraum der Hydrolyse wird beendet, indem Zitronensäure 3 zugegeben wird und dadurch der pH-Wert um mindestens 0,5 absinkt, typischerweise auf einen zweiten pH-Wert von 5,0 bis 5,5. Das von der Hydrolyse 2 erhaltene Hydrolysat 4 wird zur Abtrennung eines phosphat- und ammoniumreichen Schlammwassers 6 von einem entwässerten Hydrolysat 7 einer Entwässerung 5 auf einen Trockensubstanzgehalt größer 200 g/l unterworfen. In einer MAP-Fällung wird aus dem Schlammwasser 6 Magnesium-Ammonium-Phosphat 11 durch Zugabe eines Magnesiumionendonators 9, vorzugsweise Magnesiumchlorid 18, und einer Lauge 10, vorzugsweise Natronlauge 19, unter Anhebung des pH-Werts auf 9,0 bis 9,5 ausgefällt. Ein phosphatarmer Rückstand 12 der MAP-Fällung 8 wird dem entwässerten Hydrolysat 7 in einer Rückverdünnung 13 beigemengt, so dass ein rückverdünntes Hydrolysat 14 mit einen Trockensubstanzgehalt von 40 bis 60 g/l resultiert. Das rückverdünnte Hydrolysat 14 wird einer anaeroben Schlammbehandlung 15, das heißt einer Faulung, zugeführt. Hieraus resultiert ein Faulschlamm 16.

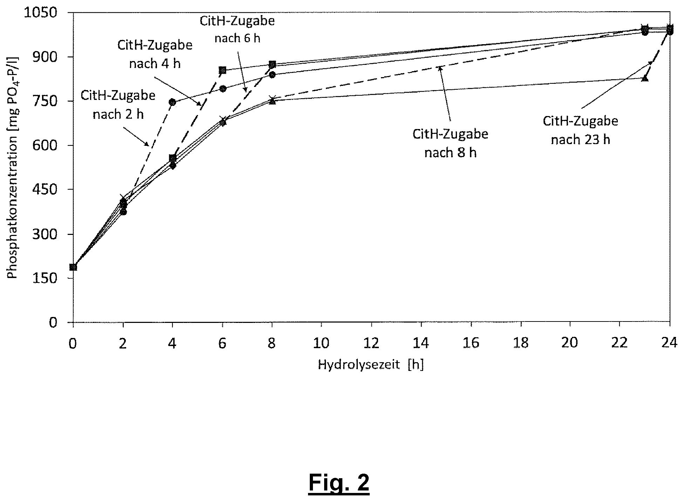

**Fig. 2** zeigt den Verlauf der Konzentration des in der Hydrolyse 2 gelösten Phosphats über der Dauer der Hydrolyse für verschiedene Zeitpunkte der Zugabe der Zitronensäure 3. Durch die Zugabe der Zitronensäure 3 resultiert in jedem Fall ein Anstieg der Phosphatkonzentration, der mit späterer Zitronensäurezugabe etwas abnimmt, weil bereits zuvor mehr Phosphat in Lösung gegangen ist. Die nach 24 Stunden erreichte Phosphatkonzentration hängt aber nicht signifikant von dem Zeitpunkt der Zitronensäurezugabe ab. Auch wenn die Zitronensäurezugabe erst nach 23 von 24 Stunden der Gesamtdauer der Hydrolyse erfolgt, wird etwa dieselbe Phosphatendkonzentration erreicht, wie bei einer Zugabe bereits nach zwei Stunden. Der Verlauf der Phosphatkonzentration für die Zugabe nach 23 Stunden lässt dabei deutlich werden, dass durch die Zugabe der Zitronensäure in jedem Fall zusätzlicher Phosphor in Form von Phosphat in Lösung gebracht werden kann. Dieser zusätzliche Phosphor wird hier auch als chemisch gebundener Phosphor bezeichnet, während der auch ohne Zugabe von Zitronensäure gelöste Phosphor hier auch biologisch gebundener Phosphor bezeichnet wird.

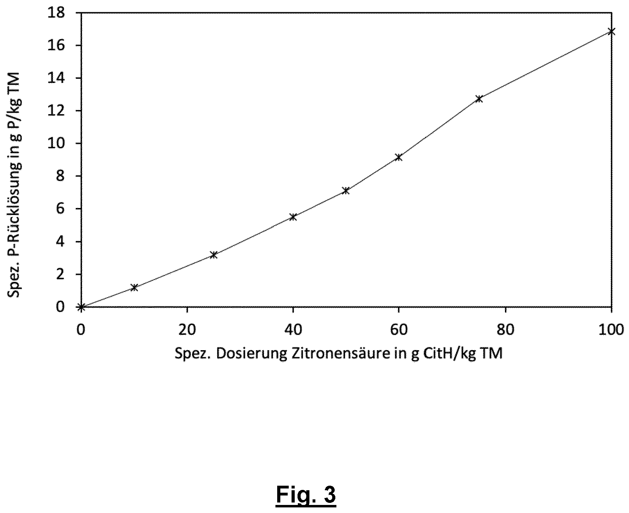

**Fig. 3** zeigt, dass die spezifische Phosphatrücklösung, die durch die Zugabe der Zitronensäure in der Hydrolyse erreicht wird, von der spezifischen Dosierungen der Zitronensäure bezogen auf die Trockensubstanz im Wesentlichen linear abhängig ist. Dies gilt zumindest so lange wie die Trockensubstanz noch relativ viel potentiell rücklösbaren chemisch gebundenen Phosphor enthält, so dass die Menge an Zitronensäure der die Rücklösung des chemisch gebundenen Phosphors limitierende Faktor ist.

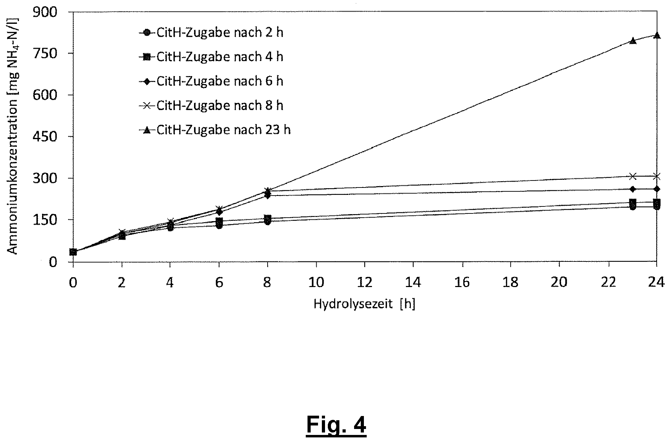

**Fig. 4** zeigt - wieder abhängig vom Zeitpunkt der Zugabe der Zitronensäure 3 - den zeitlichen Verlauf der Konzentration des in der Hydrolyse in Lösung gebrachten Ammoniums. Die Ammoniumkonzentration steigt nach der jeweiligen Zugabe der Zitronensäure kaum noch an. Entsprechend wird bei der Zugabe der Zitronensäure erst gegen Ende der Hydrolyse die höchste Ammoniumkonzentration am Ende der Hydrolyse erreicht.

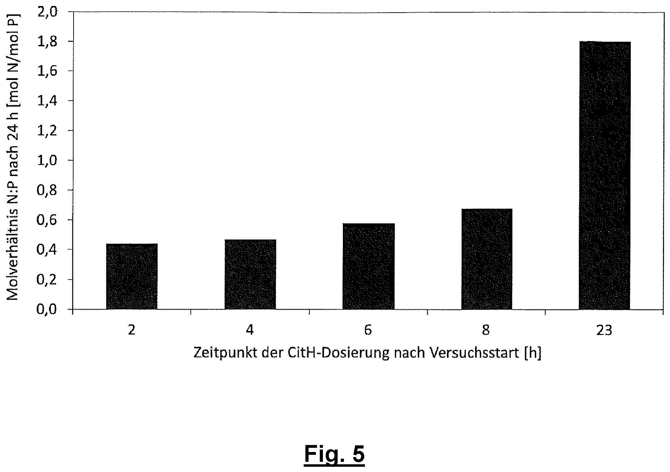

**Fig. 5****,** die das Molverhältnis von Stickstoff zu Phosphor in dem Schlammwasser 6 für die unterschiedlichen Zeitpunkte der Zugabe der Zitronensäure 3 zeigt, macht die Zusammenhänge besonders deutlich. Bei der Zugabe der Zitronensäure nach 23 von 24 Stunden der Hydrolyse wird ein Molverhältnis von 1,8, das heißt ein deutlich überstöchiometrisches Molverhältnis von gelöstem Stickstoff zu gelöstem Phosphor erreicht. Ein stöchiometrisches Molverhältnis wird bei einer Zugabe der Zitronensäure irgendwann nach der halben Gesamtdauer der Hydrolyse von 24 Stunden erreicht. Ein für die nachfolgende MAP-Fällung 8 günstiges überstöchiometrisches Molverhältnis von deutlich über 1,0 wird dann erreicht, wenn die Zugabe der Zitronensäure deutlich nach der halben Gesamtdauer der Hydrolyse 2 erfolgt.

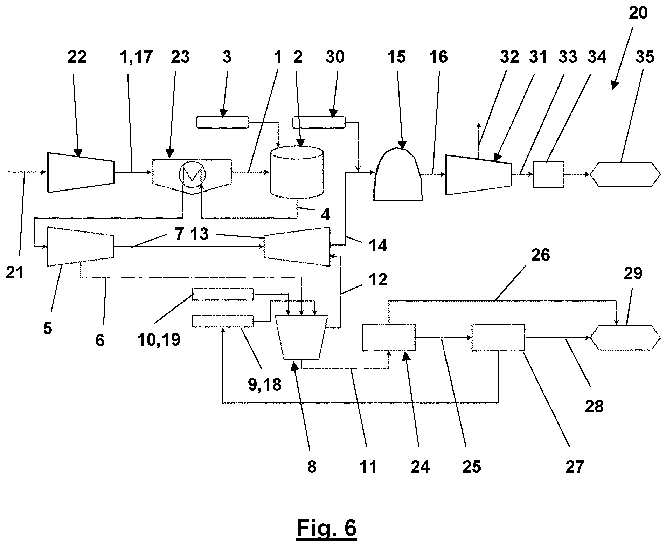

Die in **Fig. 6** skizzierte Anlage 20 zur Durchführung des erfindungsgemäßen Verfahrens weist gegenüber Fig. 1 zusätzliche Komponenten zur Durchführung zusätzlicher Verfahrensschritte auf. Überschussschlamm 21, der aus einer aeroben Schlammbehandlung abgezogen wird, wird in einer Entwässerung 22 auf den Trockensubstanzgehalt von 40 bis 50 g/l des eingedickten Überschussschlamms 17 angehoben. In einem Wärmetauscher 23 erfolgt eine Vorerwärmung des eingedickten Überschussschlamms 17 für die anschließende Hydrolyse 2. Die dem verdickten Überschussschlamm 17 in dem Wärmetauscher 23 zugeführte Wärme stammt aus dem Hydrolysat 4 am Ausgang der Hydrolyse 2. In der Hydrolyse 2 können bis zu 75 % des in der Trockensubstanz enthaltenen Phosphors ohne Einsatz von Chemikalien durch Schlammversäuerung gelöst werden, sofern der Phosphor nahezu vollständig biologisch gebunden ist. Mit Hilfe der Zugabe der Zitronensäure 3 wird auch in Form von Phosphat chemisch gebundener Phosphor gelöst, indem die metallischen Gegenionen der chemischen Phosphatbindungen durch Komplexbildung mit der Zitronensäure gebunden werden. Zugleich erfolgt in der Hydrolyse 2 bis zu der Zugabe der Zitronensäure die Freisetzung von Ammonium. Die Freisetzung des Ammoniums geht so weit, dass in der MAP-Fällung 8 kein zusätzliches Ammonium zu dem Schlammwasser 6 zugesetzt werden muss. Vielmehr reicht die Zugabe von Natronlauge 19 und Magnesiumchlorid 18. Das Magnesium-Ammonium-Phosphat 11 wird durch Kalzinierung 24 in Magnesiumphosphat 25 und Ammoniakwasser 26 aufgespalten. Das Magnesiumphosphat wird in einer Aufbereitungsanlage 27, beispielsweise gemäß sogenannter Parforce-Technologie der Parforce Engineering & Consulting GmbH, Freiberg, in Magnesiumchlorid 18 und Phosphorsäure 28 aufgetrennt. Die Phosphorsäure 28 kann ebenso wie das Ammoniakwasser 26 in der chemischen Industrie 29 weiter verwertet werden. Das rückverdünnte entwässerte Hydrolysat 14 kann mit Primärschlamm 30 versetzt werden, bevor es der Faulung 15 zugeführt wird. Der Faulschlamm 16 wird einer Entwässerung 31 unterworfen. Dabei anfallendes weiteres Schlammwasser 32 kann zu der Kläranlage zurückgeführt werden, von der der Überschussschlamm 21 und der Primärschlamm 30 stammen. Entwässerter Faulschlamm 33 kann nach Trocknung 34 beispielsweise in einem Wirbelschichtverdampfungstrockner einer thermischen Verwertung 35, beispielsweise in einem Zementwerk, zugeführt werden. Die Rückgewinnung des Magnesiumchlorids 18 durch die Aufbereitung des Magnesiumphosphats 25 in der Aufbereitungsanlage 27 kann 90 bis 95 % des Bedarfs der MAP-Fällung 8 an Magnesiumchlorid 19 decken. Die Lücke von 5 bis 10 % kann durch kommerziell verfügbares Magnesiumchlorid aufgefüllt werden. Die in Fig. 6 skizzierte Anlage ist zumindest bis zur MAP-Fällung 8 einerseits und bis zur Trocknung 34 in kontinuierlich arbeitender Prozesstechnologie implementierbar.

### BEZUGSZEICHENLISTE

- 1: Klärschlamm
- 2: Hydrolyse
- 3: Zitronensäure
- 4: Hydrolysat
- 5: Entwässerung
- 6: Schlammwasser
- 7: entwässertes Hydrolysat
- 8: MAP-Fällung
- 9: Magnesiumionendonator
- 10: Lauge
- 11: Magnesium-Ammonium-Phosphat
- 12: Rückstand der MAP-Fällung
- 13: Rückverdünnung
- 14: rückverdünntes Hydrolysat
- 15: anaerobe Schlammbehandlung
- 16: Faulschlamm
- 17: eingedickter Überschussschlamm
- 18: Magnesiumchlorid
- 19: Natronlauge
- 20: Anlage
- 21: Überschussschlamm
- 22: Eindickung
- 23: Wärmetauscher
- 24: Kalzinierung
- 25: Magnesiumphosphat
- 26: Ammoniakwasser
- 27: Aufbereitungsanlage
- 28: Phosphorsäure
- 29: chemische Industrie
- 30: Primärschlamm
- 31: Entwässerung
- 32: weiteres Schlammwasser
- 33: entwässerter Faulschlamm
- 34: Trocknung
- 35: thermische Verwertung

## Patentansprüche

1. Verfahren zur Phosphorrückgewinnung aus einem Klärschlamm (1),
- wobei der Klärschlamm (1) einer thermisch-biologischen Hydrolyse (2) unterworfen wird, um Phosphor als Phosphat aus seiner Trockensubstanz zu lösen, wobei dem Klärschlamm (1) in der Hydrolyse (2) Zitronensäure (3) zugesetzt wird,
- wobei von einem durch die Hydrolyse (2) erhaltenen Hydrolysat ein Schlammwasser (6) abgetrennt wird,
- wobei das gelöste Phosphat in einer MAP-Fällung (8) durch Anheben des pH-Werts und Zugabe eines Magnesiumionendonators (9) als Magnesium-Ammonium-Phosphat (11) aus dem Schlammwasser (6) gefällt wird,
**dadurch gekennzeichnet,**
- **dass** die Hydrolyse (2) für einen ersten Zeitraum bei einem ersten pH-Wert durchgeführt wird,
- **dass** der erste Zeitraum beendet wird, indem die Zitronensäure (3) zugesetzt wird, so dass der erste pH-Wert um mindestes 0,5 auf einen zweiten pH-Wert abgesenkt wird, und
- **dass** die Hydrolyse (2) bei dem zweiten pH-Wert
für einen zweiten Zeitraum fortgesetzt wird,
- wobei der zweite Zeitraum mindestens 0,5 h beträgt, aber kürzer ist als der erste Zeitraum.

2. Verfahren nach Anspruch 1, **dadurch gekennzeichnet, dass** die Hydrolyse (2) bei einer Temperatur zwischen 45°C und 70°C durchgeführt wird.

3. Verfahren nach Anspruch 1 oder 2, **dadurch gekennzeichnet, dass** der Trockensubstanzgehalt des Klärschlamms (1) zwischen 30 g/l und 60 g/l beträgt.

4. Verfahren nach einem der vorhergehenden Ansprüche, **dadurch gekennzeichnet, dass** die Hydrolyse (2) in dem ersten Zeitraum ohne Zugabe von Zitronensäure (3) zu dem Klärschlamm (1) durchgeführt wird.

5. Verfahren nach einem der vorhergehenden Ansprüche, **dadurch gekennzeichnet, dass** die Hydrolyse (2) in dem ersten Zeitraum bei einem pH-Wert von größer oder gleich 6,0 durchgeführt wird.

6. Verfahren nach einem der vorhergehenden Ansprüche, **dadurch gekennzeichnet, dass** der erste Zeitraum beendet wird, wenn die Freisetzung von Stickstoff aus der Trockensubstanz des Klärschlamms (1) als Ammonium auf unter 50 % ihres bisherigen Mittelwertes während der Hydrolyse (2) abgefallen ist.

7. Verfahren nach einem der vorhergehenden Ansprüche, **dadurch gekennzeichnet, dass** der erste Zeitraum 20 h bis 48 h beträgt und/oder der zweite Zeitraum 0,75 h bis 4 h beträgt.

8. Verfahren nach einem der vorhergehenden Ansprüche, **dadurch gekennzeichnet, dass** dann, wenn ein Phosphorgehalt der Trockensubstanz des Klärschlamms (1) am Ende des ersten Zeitraums (20 + z) g Phosphor je 1 kg Trockensubstanz beträgt, mindestens (z x 6) g Zitronensäure (3) je 1 kg Trockensubstanz zugegeben werden, um den ersten Zeitraum zu beenden, wobei z eine positive rationale Zahl ist.

9. Verfahren nach einem der Ansprüche 1 bis 7, **dadurch gekennzeichnet, dass** der erste Zeitraum beendet wird, indem die Zitronensäure (3) in einer Menge 20g bis 100g je 1kg Trockensubstanz des Klärschlamms (1) zugegeben wird.

10. Verfahren nach einem der vorhergehenden Ansprüche, **dadurch gekennzeichnet, dass** beim Abtrennen des Schlammwassers (6) ein Trockensubstanzgehalt des entwässerten Hydrolysats (7) von mindestens 150 g/l eingestellt wird.

11. Verfahren nach einem der vorhergehenden Ansprüche, **dadurch gekennzeichnet, dass** das entwässerte Hydrolysat (7) mit einem Rückstand (12) der MAP-Fällung (8) verdünnt und anschließend einer anaeroben Schlammbehandlung (15) unterworfen wird.

12. Verfahren nach einem der vorhergehenden Ansprüche, **dadurch gekennzeichnet, dass** dem Klärschlamm (1) und dem Schlammwasser (6) für die MAP-Fällung (8) keine Produkte einer anaeroben Schlammbehandlung (15) des entwässerten Hydrolysats (7) und/oder kein Ammonium zugesetzt wird.

13. Verfahren nach einem der vorhergehenden Ansprüche, **dadurch gekennzeichnet, dass** in der MAP-Fällung (8) der pH-Wert auf zwischen 9,0 und 9,5 angehoben wird.

14. Verfahren nach einem der vorhergehenden Ansprüche, **dadurch gekennzeichnet, dass** dem Schlammwasser (6) in der MAP-Fällung (8) Natronlauge (19) und Magnesiumchlorid (18) zugesetzt werden.

15. Verfahren nach einem der vorhergehenden Ansprüche, **dadurch gekennzeichnet, dass** der Klärschlamm (1) eingedickter Überschussschlamm (17) ist.

## Claims

1. Method of recovering phosphorus from a sewage sludge (1),
- wherein the sewage sludge (1) is subjected to a thermal-biological hydrolysis (2) in order to dissolve phosphorus as phosphate from its dry matter, wherein citric acid (3) is added to the sewage sludge (1) in the hydrolysis (2),
- wherein a sludge water (6) is separated from a hydrolysate obtained by the hydrolysis (2),
- wherein the dissolved phosphate is precipitated from the sludge water (6) as magnesium ammonium phosphate (11) in a MAP precipitation (8) by raising the pH value and adding a magnesium ion donor (9),
**characterized in**
- **that** the hydrolysis (2) is carried out for a first period of time at a first pH value,
- **that** the first period of time is terminated by adding the citric acid (3) so that the first pH value is lowered by at least 0.5 to a second pH value, and
- **that** the hydrolysis (2) is continued for a second period of time at the second pH value,
- where the second period of time is at least 0.5 h, but shorter than the first period of time.

2. Method according to claim 1, **characterized in that** the hydrolysis (2) is carried out at a temperature between 45°C and 70°C.

3. Method according to claim 1 or 2, **characterized in that** the dry matter content of the sewage sludge (1) is between 30 g/l and 60 g/l.

4. Method according to any of the preceding claims, **characterized in that** the hydrolysis (2) is carried out in the first period of time without adding citric acid (3) to the sewage sludge (1).

5. Method according to any of the preceding claims, **characterized in that** the hydrolysis (2) is carried out in the first period of time at a pH of greater than or equal to 6.0.

6. Method according to any of the preceding claims, **characterized in that** the first period of time is terminated when the release of nitrogen from the dry matter of the sewage sludge (1) as ammonium has fallen to below 50% of its previous mean value during the hydrolysis (2).

7. Method according to any of the preceding claims, **characterized in that** the first period of time is 20 h to 48 h and/or the second period of time is 0.75 h to 4 h.

8. Method according to any of the preceding claims, **characterized in that**, when a phosphorus content of the dry matter of the sewage sludge (1) at the end of the first period of time is (20+ z) g of phosphorus per 1 kg of dry matter, at least (z x 6) g of citric acid (3) per 1 kg of dry matter are added to terminate the first period of time, z being a positive rational number.

9. Method according to any of claims 1 to 7, **characterized in that** the first period of time is terminated by adding the citric acid (3) in an amount of 20 g to 100 g per 1 kg of dry matter of the sewage sludge (1).

10. Method according to any of the preceding claims, **characterized in that** a dry matter content of the dewatered hydrolysate (7) of at least 150 g/l is set during separation of the sludge water (6).

11. Method according to any of the preceding claims, **characterized in that** the dehydrated hydrolysate (7) is diluted with a residue (12) of the MAP precipitation (8) and then subjected to an anaerobic sludge treatment (15).

12. Method according to any of the preceding claims, **characterized in that** no products of an anaerobic sludge treatment (15) of the dewatered hydrolysate (7) and/or no ammonium is added to the sewage sludge (1) and the sludge water (6) for the MAP precipitation (8).

13. Method according to any of the preceding claims, **characterized in that** the pH value in the MAP precipitation (8) is raised to between 9.0 and 9.5.

14. Method according to any of the preceding claims, **characterized in that** caustic soda (19) and magnesium chloride (18) are added to the sludge water (6) in the MAP precipitation (8).

15. Method according to any of the preceding claims, **characterized in that** the sewage sludge (1) is thickened surplus activated sludge (17).

## Revendications

1. Procédé de récupération de phosphore à partir d'une boue d'épuration (1),
- dans lequel la boue d'épuration (1) est soumise à une hydrolyse thermique-biologique (2) afin de solubiliser le phosphore sous forme de phosphate à partir de sa substance sèche, dans lequel de l'acide citrique (3) est ajouté à la boue d'épuration (1) lors de l'hydrolyse (2),
- dans lequel une eau boueuse (6) est séparée d'un hydrolysat obtenu grâce à l'hydrolyse (2),
- dans lequel le phosphate dissous est précipité sous forme de phosphate d'ammonium et de magnésium (11) à partir de l'eau boueuse (6) par élévation du pH et ajout d'un donneur d'ions magnésium (9) lors d'une précipitation MAP (8),
**caractérisé en ce que**
- l'hydrolyse (2) est réalisée pendant une première période avec un premier pH,
- la première période est terminée par l'ajout de l'acide citrique (3), de sorte que le premier pH est abaissé d'au moins 0,5 à un deuxième pH, et
- l'hydrolyse (2) est poursuivie avec le deuxième pH pendant une deuxième période,
- dans lequel la deuxième période est d'au moins 0,5 h, mais est plus courte que la première période.

2. Procédé selon la revendication 1, **caractérisé en ce que** l'hydrolyse (2) est réalisée à une température comprise entre 45 °C et 70 °C.

3. Procédé selon la revendication 1 ou 2, **caractérisé en ce que** la teneur en substance sèche de la boue d'épuration (1) est comprise entre 30 g/l et 60 g/l.

4. Procédé selon l'une des revendications précédentes, **caractérisé en ce que** l'hydrolyse (2) est réalisée pendant la première période sans ajout d'acide citrique (3) à la boue d'épuration (1).

5. Procédé selon l'une des revendications précédentes, **caractérisé en ce que** l'hydrolyse (2) est réalisée pendant la première période avec un pH supérieur ou égal à 6,0.

6. Procédé selon l'une des revendications précédentes, **caractérisé en ce que** la première période est terminée lorsque la libération d'azote de la substance sèche de la boue d'épuration (1) sous forme d'ammonium a chuté à moins de 50 % de sa valeur moyenne précédente pendant l'hydrolyse (2).

7. Procédé selon l'une des revendications précédentes, **caractérisé en ce que** la première période est de 20 h à 48 h et/ou la deuxième période est de 0,75 h à 4 h.

8. Procédé selon l'une des revendications précédentes, **caractérisé en ce que**, lorsqu'une teneur en phosphore de la substance sèche de la boue d'épuration (1) à la fin de la première période est de (20+z) g de phosphore par kg de substance sèche, au moins (z x 6) g d'acide citrique (3) par kg de substance sèche sont ajoutés pour terminer la première période, z étant un nombre rationnel positif.

9. Procédé selon l'une des revendications 1 à 7, **caractérisé en ce que** la première période est terminée par l'ajout d'acide citrique (3) dans une quantité de 20 g à 100 g par kg de substance sèche de la boue d'épuration (1).

10. Procédé selon l'une des revendications précédentes, **caractérisé en ce que**, lors de la séparation de l'eau boueuse (6), une teneur en substance sèche de l'hydrolysat déshydraté (7) d'au moins 150 g/l est ajustée.

11. Procédé selon l'une des revendications précédentes, **caractérisé en ce que** l'hydrolysat déshydraté (7) est dilué avec un résidu (12) de la précipitation MAP (8) et ensuite soumis à un traitement anaérobie des boues (15).

12. Procédé selon l'une des revendications précédentes, **caractérisé en ce qu'**aucun produit d'un traitement anaérobie des boues (15) de l'hydrolysat déshydraté (7) et/ou aucun ammonium n'est ajouté à la boue d'épuration (1) et à l'eau boueuse (6) pour la précipitation MAP (8).

13. Procédé selon l'une des revendications précédentes, **caractérisé en ce que**, lors de la précipitation MAP (8), le pH est élevé entre 9,0 et 9,5.

14. Procédé selon l'une des revendications précédentes, **caractérisé en ce que** de la soude caustique (19) et du chlorure de magnésium (18) sont ajoutés à l'eau boueuse (6) lors de la précipitation MAP (8).

15. Procédé selon l'une des revendications précédentes, **caractérisé en ce que** la boue d'épuration (1) est une boue excédentaire épaissie (17).
